(19) **Europäisches Patentamt**

**European Patent Office**

**Office européen des brevets**

(11) **EP 1 440 270 B1**

(12) **EUROPÄISCHE PATENTSCHRIFT**

(45) Veröffentlichungstag und Bekanntmachung des Hinweises auf die Patenterteilung:
**05.07.2006 Patentblatt 2006/27**

(21) Anmeldenummer: **02765284.1**

(22) Anmeldetag: **08.10.2002**

(51) Int Cl.:
**F16L 17/04** (2006.01)

(86) Internationale Anmeldenummer:
**PCT/IB2002/004114**

(87) Internationale Veröffentlichungsnummer:
**WO 2003/033956 (24.04.2003 Gazette 2003/17)**

(54) **Rohrkupplung und Verankerungsring**

Pipe coupling and anchor ring

Raccord de tuyaux et anneau d'ancrage

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **11.10.2001 CH 187201**

(43) Veröffentlichungstag der Anmeldung:
**28.07.2004 Patentblatt 2004/31**

(73) Patentinhaber: **Straub Werke AG
7223 Wangs (CH)**

(72) Erfinder: **SCHERRER, Anton
CH-9473 Gams (CH)**

(74) Vertreter: **Rosenich, Paul
Patentbüro Paul Rosenich AG
BGZ
9497 Triesenberg (LI)**

(56) Entgegenhaltungen:
**EP-A- 0 931 966        EP-A- 1 036 970**

EP 1 440 270 B1

**Beschreibung**

Die Erfindung betrifft eine Rohrkupplung nach Anspruch 1 sowie einen Verankerungsring für eine solche Rohrkupplung mit den Oberbegriffsmerkmalen des Anspruches 2.

Bei solchen Rohrkupplungen bzw. Verankerungsringen entsteht durch das Eindringen der Zähne des Verankerungsringes in die Rohrwandung ein Formschluss, der eine sichere Verankerung der zu verbindenden Rohre in der Rohrkupplung ermöglicht Bel den heute im Rohrleitungsbau verwendeten Rohren werden je nach Anwendung unterschiedliche Rohrwerkstoffe und Rohrwandstärken eingesetzt Beispielsweise kommen im Leichtbau für Luft- und andere Fahrzeuge Aluminiumlegierungen und andere Leichtmetalle zur Anwendung, wogegen bei höheren Anforderungen, auch bezüglich Korrosion beispielsweise sehr harte Titanlegierungen eingesetzt werden. Insbesondere bei solchen Rohren aus Titanlegierungen oder auch aus Chrornmickelstählen ist der Eingriff der bisher bekannten Verankerungsringe teilweise problematisch.

Aus der EP 211 158 A1 ist eine Rohrkupplung bekannt, deren Verankerungsringe an ihrer eingriffsseitigen Stirnseite ein konkaves, insbesondere V-förmiges, Profil aufweisen. Die einzelnen Zähne werden dabei vorzugsweise durch Stanzen erzeugt Die Wirkungsweise dieses V-förmigen Profils besteht darin, dass die eine Kante der Stirnseite eine Schneidkante bildet, welche bei der Verankerung in die Rohroberfläche eindringt, wogegen die andere Kante eine Art Tiefenanschlag bildet, welche das Eindringen der Schneidkante in die Rohroberfläche begrenzt

Aus der EP 940 618 A1 ist eine weitere Rohrkupplung bekannt, deren Verankerungsringe ein asymmetrisches Profil aufwefsen. Durch das asymmetrische Profil wird ein spitzer Keilwinkel gebildet, der das Eindringen des Verankerungsringes in die Rohr oberfläche verbessern soll. Das Eindringen des Verankerungsringes in die Rohroberfläche wird dabei jedoch, im Gegensatz zur EP 211 158 A1 nicht begrenzt

Die EP 931 966 A1 geht von einem Stand der Technik gemäss der EP 940 618 A1 aus, wobei seitlich an allen Zähnen eine Vertiefung eingedrückt ist, welche zu einer Verbesserung des Werkstoffes bzw. der Schneidengeometrie führen soll.

Bei den bisher genannten Schriften sind sämtliche Zähne über den gesamten Umfang des Verankerungsringes gleich ausgebildet Dies gilt hinsichtlich der Schneidgeometrie nicht bei den Zähnen nach der EP 1 036 970, die als nächstliegender Stand der Technick für den Verankerungsring nach Anspruch 2 betrachte wird Allerdings gilt auch für diesen Stand der Technik, dass besonders im Falle extremer Werkstoffe, d.h. besonders weicher oder besonders harter Werkstoffe, und gar beim Kuppeln von Rohren aus unterschiedlichen Werkstoffen, sich am Verankerungsring Probleme ergeben, indem dieser entweder zu stark oder gar nicht in die Rohroberfläche eindringt

Der Erfindung liegt die Aufgabe zugrunde, eine Rohrkupplung bzw. einen Verankerungsring zu schaffen, welch letzterer ohne wesentlichen Mehraufwand bei der Herstellung ein optimales Anpassen an den jeweiligen Rohrwerkstoff ermöglicht

Gemäss der Erfindung wird dies durch die Merkmale des Anspruches 1 bzw. des Anspruches 2 erreicht

Durch die in ihrer Schneidgeometrie nun unterschiedlichen Zähne können diese ganz, nur teilweise oder gar nicht mit dem Rohrwerkstoff zum Eingriff kommen. So kann beispielsweise für harte Werkstoffe die Anzahl der mit dem Rohr in Eingriff gelangenden Zähne gegenüber dem Stand der Technik reduziert werden. Dies aber führt an den zum Eingriff gelangenden Zähnen zu höheren Belastungen sowohl am Zahn als auch am Rohrwerkstoff, so dass diese Zähne bei harten Rohroberflächen besser eindringen können und nicht an der Rohraberfläche abrutschen.

Eine zweckmäßige Ausführung ist durch Anspruch 3 charakterisiert Dabei können die Gruppen von Zähnen durch ein Stanzwerkzeug gebildet werden, bei dem gleichzeitig mehrere Zähne aus dem profilierten Bandmaterial herausgestanzt werden. Die Anzahl der Zähne pro Gruppe kann auch bei verschiedenen Kupplungsgrössen unterschiedlich sein.

Eine vorteilhafte Lösung besteht darin, dass die Gruppen von Zähnen aus einer Anzahl n von A- Zähnen und einer Anzahl m von B- Zähnen bestehen, wobei bei den B- Zähnen gegenüber den A- Zähnen die Verankerungskante in radialer und/oder axialer Richtung etwas zurückversetzt ist. Die A- Zähne sind somit diejenigen, die beim Verspannen der Rohrkupplung zuerst mit der Rohrwandung in Eingriff gelangen. Die gegenüber den A- Zähnen zurückversetzten B- Zähne können später oder auch gar nicht zum Eingriff mit der Rohroberfläche gelangen. Diese B- Zähne können auch stumpf sein und/ oder die Funktion eines die Eindringtiefe begrenzenden Anschlages übernehmen. Die Summe von n + m ergibt die Grösse X der Gesamtzahl von Zähnen pro Gruppe.

Die A- Zähne weisen zweckmässigerweise an Ihrer Stirnseite eine Schneidkante auf. Diese Schneidkante kann in Umfangsrichtung des Rohres verlaufen oder, wie dies bspw. aus der EP -A1-211158 bekannt ist, wenigstens teilweise abgewinkelt sein. Die erste Variante ergibt einen linienförmigen Eingriff des Verankerungsringes mit der Rohroberfläche. Bei der zweiten Variante ist der Eingriff der einzelnen Zähne eher punktförmig.

Eine vorteilhafte Ausführung besteht darin, dass die Schneidkante asymmetrisch ausgebildet ist. Durch die asymmetrische Schneidenform können relativ spitze Keilwinkel gebildet und somit das Eindringen der Zähne in den Rohrwerkstoff erleichtert werden.

Insbesondere bei weichen Rohrwerkstoffen sollte das Eindringen der Zähne begrenzt werden, um eine zu starke Schwächung der Rohrwandstärke zu vermeiden. Es ist daher zweckmässig, dass die A- Zähne an ihrer Stirnseite ein konkaves, vorzugsweise V- förmig ausgebildetes Profil aufweisen.

Die Anzahl der Zähne kann im Prinzip beliebig gewählt werden. Es ist jedoch vorteilhaft, dass die Anzahl n wenigstens 1 und dass n vorzugsweise kleiner als die Anzahl m ist. Somit ist die Anzahl der vorstehenden A- Zähne gegenüber den in axialer und/oder radialer Richtung zurückversetzten B- Zähnen in der Minderzahl. Dies bedeutet, dass die Verankerung über eine reduzierte Anzahl von Zähnen über dem Umfang verteilt ist.

Eine zweckmässige Ausführung besteht darin, dass A- und B- Zähne innerhalb einer Gruppe oder einen gesamten Umfang gleichmässig verteilt angeordnet sind.

Somit werden auch die Kräfte der Verankerung über den Umfang, bzw. innerhalb einer Gruppe, gleichmässig verteilt.

Eine weitere vorteilhafte Ausführung besteht darin, dass die A- Zähne und B- Zähne innerhalb einer Gruppe, oder über den gesamten Umfang, asymmetrisch verteilt angeordnet sind. Doch die asymmetrische Anordnung können bspw. gleich ausgebildete Zähne nebeneinander liegen und die Belastung somit auf mehrere Zähne verteilt werden.

Es ist zweckmässig, dass die B- Zähne durch einen Material umformenden Vorgang gestaucht oder durch ein Material abtragendes Verfahren bearbeitet werden. Das Stauchen der Zähne kann bspw. durch einen Kalt-Umformvorgang erzeugt werden. Dadurch kann das umgeformte Material bspw. gleichzeitig als die Eindringtiefe begrenzender Anschlag dienen. Als materialabtragende Verfahren kommen bspw. Schleifen oder Fräsen infrage. Beide Verfahren können beispielsweise auch in Kombination mit einem Stanzvorgang erfolgen.

Eine vorteilhafte Ausführung besteht darin, dass die A- Zähne durch einen Umformvorgang gestreckt oder durch Materialauftrag gebildet werden. Das Strekken der Zähne kann bspw. durch Kaltverformung in einem Pressvorgang erfolgen. Ein Materialauftrag kann bspw. durch einen oder mehrere Schweissvorgänge durchgeführt werden.

Beim Verspannen der Rohrkupplung wird der Verankerungsring im Umfang verkleinert und somit sein Innendurchmesser verringert. Dabei gleiten die Zähne über den Umfang der Rohroberfläche. Um diese Bewegung zu ermöglichen, ist es vorteilhaft, dass die seitlichen Flanken der Zähne angeschrägt sind. Dadurch wird vermieden, dass scharfe Ecken gebildet werden, welche sich beim Verspannen der Rohrkupplung in die Rohroberfläche einhaken können und somit der Ausgleich über den Umfang des Verankerungsringes erschwert oder verunmöglicht wird.

## Figurenbeschreibung

Die Erfindung soll nachstehend, anhand der sie bspw. wiedergebenden Zeichnungen näher erläutert werden. Die Bezugszeichenliste und die Fig .1 bis Fig.

12 sind zusammen mit den in den Ansprüchen beschriebenen, beziehungsweise geschützten Gegenständen integrierender Bestandteil der Offenbarung dieser Anmeldung.

Die Figuren werden zusammenhängend und übergreifend beschrieben. Gleiche Bezugszeichen bedeuten gleiche Bauteile, Bezugszeichen mit unterschiedlichen Indizes geben funktionengleiche Bauteile an. Es zeigen:

FIG. 1      eine Rohrkupplung mit einem erfindungsgemässen Verankerungsring, teilweise im Längsschnitt;

Fig. 2      eine Stirnansicht der in Fig. 1 dargestellten Rohrkupplung;

Fig. 3      eine erste Ausführung des erfindungsgemässen Verankerungsringes;

Fig. 4      eine Variante des in Fig. 3 dargestellten Verankerungsringes;

Fig. 5      eine Variante des dargestellten Verankerungsringes;

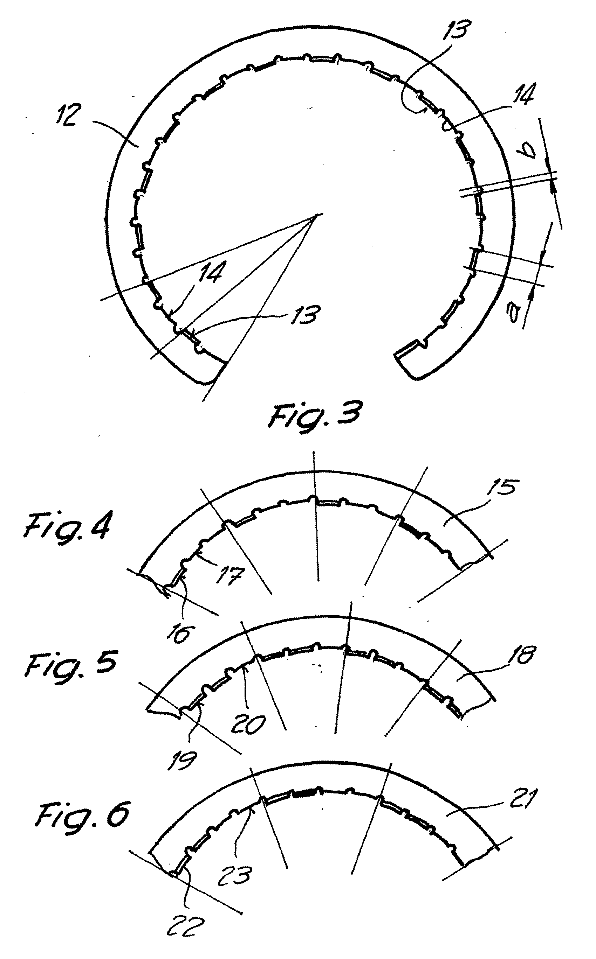

Fig. 5      eine Variante des Verankerungsringes;

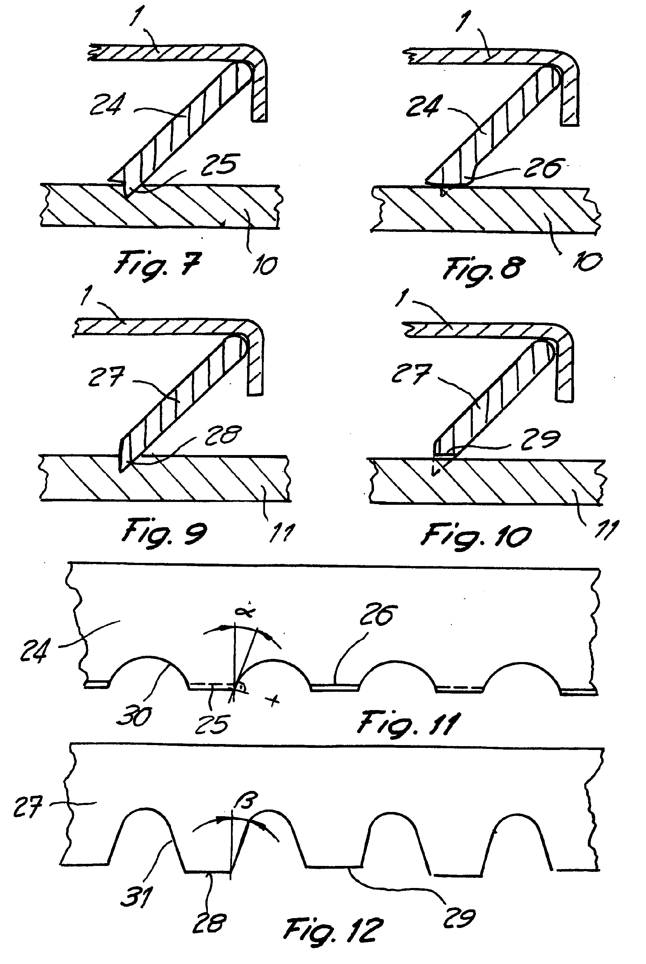

Fig. 6      eine weitere Variante des Verankerungsringes;

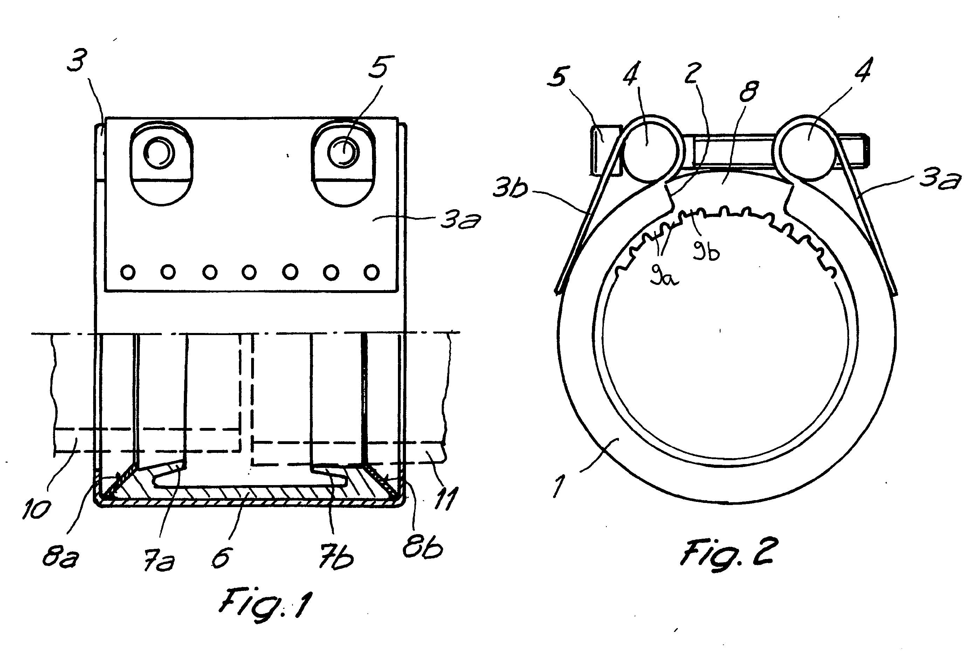

Fig. 7      einen Ausschnitt einer Variante der in Fig. 1 dargestellten Rohrkupplung;

Fig. 8      einen weiteren Schnitt durch die in Fig. 7 dargestellte Rohrkupplung;

Fig. 9      einen weiteren Ausschnitt einer Variante der in Fig. 1 dargestellten Rohrkupplung;

Fig. 10      einen weiteren Schnitt durch die in Fig. 9 dargestellte Rohrkupplung;

Fig. 11      einen Ausschnitt eines erfindungsgemässen Verankerungsringes, in Ansicht und

Fig. 12      eine Variante des in Fig.11 dargestellten Verankerungsringes.

Die aus Fig. 1 und 2 ersichtliche Rohrkupplung weist ein im wesentlichen zylinderförmiges, mit einem Längsschlitz 2 versehenes Gehäuse 1 auf, wobei die freien Enden des Gehäuses 1 als umgebogene Laschen 3, 3b ausgebildet sind. In den Laschen 3a, 3b sind zylindrische Verschlussbolzen 4 angeordnet. Mittels Verschlusschrauben 5 , welche die Verschlussbolzen 4 durchsetzen, ist das Gehäuse 1 radial verspannbar, wobei der Längsschlitz 2 verengt werden kann. Im Gehäuse 1 ist eine vorzugsweise aus einem Elastomer bestehende Dichtmanschette 6 zur Abdichtung der zu verbindenden Rohre angeordnet. Die Dichtmanschette 6 weist zu diesem Zweck elastisch verformbare Dichtlippen 7a, 7b auf. An beiden Enden der Dichtmanschette 6 befinden sich Verankerungsringe 8 welche vorzugsweise etwa 45° zur Längsachse der Rohrkupplung eingebaut sind und sich in der Ecke der radial nach innen gerichteten Seitenwände des Gehäuses 1 an diesem abstützen.

Wie insbesondere aus Fig. 2 ersichtlich ist, sind die Verankerungsringe 8 an ihrer freien Stirnseite mit Zähnen 9a, 9b versehen. Die Zähne 9a, 9b sind unterschiedlich ausgebildet, wobei die Zähne 9a die Zähne 9b radial nach innen überragen.

In Fig. 1 sind zwei miteinander zu verbindende Rohre 10, 11 dargestellt. Im Bereich des Rohres ist die Rohrkupplung in unverspanntem Zustand dargestellt. Die Dichtlippe 7a und der Verankerungsring 8a berühren dabei die Oberfläche des Rohres 10 noch nicht. Bei dem auf der rechten Hälfte dargestellten, verspannten Zustand der Rohrkupplung haben sich die Dichtlippe 7b dichtend gegen die Oberfläche des Rohres 11 gelegt und die Zähne 9a des Verankerungsringes 8b sind teilweise in die Oberfläche des Rohres 11 eingedrungen.

Die Fig. 3 bis Fig. 6 zeigen unterschiedliche Ausführungen von Verankerungsringen.

Der aus Fig. 3 ersichtliche Verankerungsring 12 weist an seiner Innenseite Gruppen von jeweils zwei unterschiedlich ausgebildeten Zähnen auf. Die als A- Zähne bezeichneten Zähne 13 überragen die als B- Zähne bezeichneten Zähne 14 radial nach innen. Beim Verankerungsring 12 sind die A- Zähne 13 und die B- Zähne 14 abwechslungsweise nebeneinander angeordnet. Mit anderen Worten: Der Verankerungsring 12 weist etwa gleich viele A- Zähne 13 wie B- Zähne auf.

In Fig. 3 ist die Zahnbreite mit "a" und die Breite der zwischen den einzelnen Zähnen bestehenden Lücken mit "b" bezeichnet.

Unter der Voraussetzung, dass sich der Verankerungsring 12 im verspannten Zustand der Rohrkupplung über den gesamten Umfang erstreckt gilt die allgemeine Formel für den tragenden Umfangsanteil TU :

$$TU[\%] = \left(\frac{n}{n+m}\right) * \left(\frac{a}{a+b}\right) * 100\%$$

Da bei dem in Fig. 3 dargestellten Beispiel des Verankerungsringes 12 die Anzahl n der A- Zähne und die Anzahl m der B- Zähne jeweils gleich sind, beträgt der tragenden Umfangsanteil (TU) somit:

$$\left(\frac{1}{1+1}\right)\left(\frac{a}{a+b}\right) = \frac{1}{2}\left(\frac{a}{a+b}\right)$$

d.h. der tragende Umfangsanteil beträgt in diesem Beispiel nur noch die Hälfte der herkömmlichen Verankerungsringe mit über den gesamten Umfang gleich ausgebildeten Zähnen.

Beim aus Fig. 4 ersichtlichen Verankerungsring 15 besteht eine sich wiederholende Gruppe aus jeweils einem A- Zahn 16 und zwei gegenüber diesem zurückgestuften B- Zähnen 17. Über den gesamten Umfang weist der Verankerungsring 15 somit einen Drittel A- Zähne 16 und zwei Drittel B- Zähne auf. Der tragende Umfangsanteil reduziert sich dabei auf einen Drittel desjenigen von herkömmlichen Verankerungsringen. Solche Verankerungsringe 15 werden vorzugsweise für härtere Rohrwerkstoffe eingesetzt.

Die aus den Fig. 5 und 6 ersichtlichen Verankerungsringe 18 und 21 unterscheiden sich von denn Ausführungen gemäss Fig. 3 und 4 durch die Anteile von A- Zähnen 19 und 22 und B- Zähnen 20 und 23.

Bei dem in Fig. 5 dargestellten Verankerungsring beträgt der tragende Umgangsanteil TU:

$$\left(\frac{2}{2+1}\right)\left(\frac{a}{a+b}\right) = \frac{2}{3}\left(\frac{a}{a+b}\right),$$

d.h. der tragende Umfangsanteil beträgt in diesem Beispiel 2/3 der herkömmlichen Verankerungsringe mit über den gesamten Umfang gleich ausgebildeten Zähnen.

Bei dem in Fig. 6 dargestellten Verankerungsring 21 beträgt, rein mathematisch gesehen, der tragende Anteil gleich viel wie beim Verankerungsring 12 in Fig. 3. Unterschiedlich ist jedoch die Verteilung, indem immer zwei A- Zähne 22 und zwei B- Zähne 23 nebeneinander angeordnet sind. Dies kann für gewisse Rohrwerkstoffe günstigere Eingriffsverhältnisse ergeben.

Gemeinsam ist diesen Verankerungsringen, dass es sich dabei um über den Umfang wiederholende Gruppen mit unterschiedlich ausgebildeten Zähnen handelt. Es können jedoch auch mehrere unterschiedliche Gruppen von Zähnen über den Umfang verteilt angeordnet werden. Durch Wahl der Anzahl von A- Zähnen und B- Zähnen pro Gruppe kann der tragende Umfangsanteil somit stufenweise, bzw. digital reduziert und dem jeweiligen Rohrwerkstoff angepasst werden.

Die aus Fig. 7 und 8 ersichtlichen Ausschnitte einer Rohrkupplung zeigen einen zwischen dem Gehäuse 1 und dem Rohr 10 verspannten Verankerungsring 24. Der Verankerungsring 24 weist an seiner Stirnseite ein konkaves, etwa V-förmiges Profil auf und mit scharfen A- Zähnen 25 und beispielsweise durch Kaltumformung zurückgestufte B- Zähne 26 versehen. Die B- Zähne 26 können als das Eindringen der A-Zähne 25 in die Rohroberfläche des Rohres 10 begrenzender Anschlag dienen.

Die in Fig. 9 und 10 dargestellte Ausführung unterscheidet sich von der in Fig. 7 und 8 dargestellten Ausführung durch den Querschnitt des Verankerungsringes 27. Der Verankerungsring 27 weist ein asymmetrisches Profil auf. Dabei werden schneidenförmige A- Zähne 28 gebildet. Die gegenüber den A- Zähnen 28 zurückgestuften B-Zähne 29 können bspw. durch einen Schleifvorgang erzeugt werden. Die B- Zähne 29 können ebenfalls das eindringen der A- Zähne 28 in die Oberfläche des Rohres 11 begrenzen.

Fig. 11 und 12 zeigen das unverformte, bandförmige Profil von Verankerungsringen 24 und 27, wobei die A- Zähne 25 und 28 und die B- Zähne 26 und 29 durch Ausnehmungen 30 und 31 erzeugt werden. Die Ausnehmungen 31 und 32 sind so ausgebildet, dass Seitenflanken spitze Winkel α und β bilden. Dadurch wird beim Verspannen der Rohrkupplung verhindert, das die Ecken der Ausnehmungen 31 und 32 an der Rohroberfläche einhängen bzw. einhaken, wodurch ein Ausgleich des Verankerungsringes über den gesamten Rohrumfang behindert oder verunmöglicht wird.

**Bezugszeichenliste**

| | |
|---|---|
| 1 | Gehäuse |
| 2 | Längsschlitz |
| 3 a, b | Lasche |
| 4 | Verschlussbolzen |
| 5 | Verschlussschraube |
| 6 | Dichtmanschette |
| 7 a, b | Dichtlippe |
| 8 a, b | Verankerungsring |
| 9 a, b | Zähne |
| 10 | Rohr |
| 11 | Rohr |
| 12 | Verankerungsring |
| 13 | A-Zahn |
| 14 | B-Zahn |
| 15 | Verankerungsring |
| 16 | A- Zahn |
| 17 | B- Zahn |
| 18 | Verankerungsring |
| 19 | A- Zahn |
| 20 | B- Zahn |
| 21 | Verankerungsring |
| 22 | A- Zahn |
| 23 | B- Zahn |
| 24 | Verankerungsring |
| 25 | A- Zahn |
| 26 | B- Zahn |
| 27 | Verankerungsring |
| 28 | A- Zahn |
| 29 | B- Zahn |
| 30 | Ausnehmung |
| 31 | Ausnehmung |

**Patentansprüche**

1. Spannbare Rohrkupplung mit einem um die zu verbindenden Rohrenden (10, 11) spannbaren Gehäuse (1) mit wenigstens einem, vorzugsweise aus einem Elastomer bestehenden Dichtungselement (6) und mit wenigstens einem im Durchmesser veränderbaren Verankerungsring (8a, 8b, 12, 15, 18, 21, 24, 27), insbesondere zum axial zugfesten Verbinden von glattendigen Rohren, wobei der Verankerungsring (8a, 8b, 12, 15, 18, 21, 24, 27) sich im verspannten Zustand der Rohrkupplung einerseits am Gehäuse (1) und andererseits an einem Rohrende (10, 11) axial und/oder radial abstützt und an seiner Innenseite mit dem jeweiligen Rohrende (10, 11) in Eingriff bringbare Zähne (9a, 9b; 13,14; 16, 17; 19, 20; 22, 23; 25, 26; 28, 29) aufweist, deren Gesamtzahl in sich wiederholende Gruppen von Zähnen mit zumindest zwei unterschiedlichen Zähnen in wenigstens einer Gruppe unterteilt ist, wobei diese wenigstens eine Gruppe zumindest zwei Zähne aufweist, von denen der eine (9b; 14; 17; 20; 23; 26; 29) relativ zum anderen stufenartig radial und/oder axial zurückversetzt ist..

2. Verankerungsring für eine Rohrkupplung nach Anspruch 1, der an seiner radialen Innenseite mit einem Rohrende (10, 11) in Eingriff bringbare Zähne (9a, 9b; 13,14; 16, 17; 19, 20; 22, 23; 25, 26; 28, 29) aufweist, deren Gesamtzahl in sich wiederholende Gruppen von Zähnen mit zumindest zwei unterschiedlichen Zähnen in wenigstens einer Gruppe unterteilt ist, **dadurch gekennzeichnet, dass** diese wenigstens eine Gruppe zumindest zwei Zähne aufweist, von denen der eine, als B-Zahn bezeichnete Zahn (9b; 14; 17; 20; 23; 26; 29) relativ zum anderen, als A-Zahn bezeichneten Zahn stufenartig radial und/oder axial zurückversetzt ist.

3. Verankerungsring nach Anspruch 2, **dadurch gekennzeichnet, dass** wenigstens eine Gruppe aus einer Anzahl von Zähnen (9a, 9b) besteht, deren Grösse zwischen zwei und zehn, vorzugsweise zwischen drei und sechs, insbesondere zwischen vier und fünf, beträgt, und/oder dass Gruppen von Zähnen jeweils aus einer Anzahl n von A-Zähnen (13, 16, 19,22, 25, 28) und einer Anzahl m von B- Zähnen bestehen.

4. Verankerungsring nach einem der vorangehenden Ansprüche, **dadurch gekennzeichnet, dass** die A-Zähne (13, 16, 19,22, 25, 28) an ihrer Stirnseite eine Schneidkante aufweisen.

5. Verankerungsring nach Anspruch 4, **dadurch gekennzeichnet, dass** die Schneidkante asymmetrisch ausgebildet ist.

6. Verankerungsring nach einem der vorangehenden Ansprüche, **dadurch gekennzeichnet, dass** die A-Zähne (13,16,19,22, 25, 28) an ihrer Stirnseite ein konkaves, vorzugsweise V-förmig ausgebildetes Profil aufweisen.

7. Verankerungsring nach einem der vorangehenden Ansprüche, **dadurch gekennzeichnet, dass** die Anzahl n wenigstens 1 und dass vorzugsweise n kleiner als die Anzahl m ist.

8. Verankerungsring nach einem der vorangehenden Ansprüche, **dadurch gekennzeichnet, dass** A- Zähne (13, 16, 19,22, 25, 28) und B- Zähne (14, 17, 20, 23, 26, 29) innerhalb einer Gruppe, oder über den gesamten Umfang, gleichmässig verteilt angeordnet sind.

9. Verankerungsring nach einem der vorangehenden Ansprüche, **dadurch gekennzeichnet, dass** die A-Zähne (13, 16, 19,22, 25, 28)und B-Zähne (14, 17, 20, 23, 26, 29) innerhalb einer Gruppe, oder über den gesamten Umfang, asymmetrisch verteilt angeordnet sind.

10. Verankerungsring nach einem der vorangehenden Ansprüche, **dadurch gekennzeichnet, dass** die B-Zähne (14, 17, 20, 23, 26, 29) durch einen Umformvorgang gestaucht oder durch ein materialabtragendes Verfahren bearbeitet werden.

11. Verankerungsring nach einem der vorangehenden Ansprüche, **dadurch gekennzeichnet, dass** die A-Zähne (13, 16, 19,22, 25, 28)durch einen Umformvorgang gestreckt oder durch Materialauftrag gebildet werden.

12. Verankerungsring nach einem der vorangehenden Ansprüche, **dadurch gekennzeichnet, dass** die seitlichen Flanken der Zähne angeschrägt sind.

**Claims**

1. Clampable pipe coupling having a housing (1) which can be clamped around the pipe ends (10, 11) to be connected and comprises at least one sealing element (6) preferably consisting of an elastomer and comprising at least one anchor ring (8a, 8b, 12, 15, 18, 21, 24, 27), variable in diameter, in particular for the axially tight connection of smooth-ended pipes, the anchor ring (8a, 8b, 12, 15, 18, 21, 24, 27), in the clamped state of the pipe coupling, being supported axially and/or radially on the one hand on the housing (1) and on the other hand on one pipe end (10, 11) and having on its inside teeth (9a, 9b; 13,14; 16, 17; 19, 20; 22, 23; 25, 26; 28, 29) which can be made to engage the respective pipe end (10, 11) and the total number of which is divided into repeating groups of teeth with at least two different teeth in at least one group, this at least one group having at least two teeth, one (9b; 14; 17; 20; 23; 26; 29) of these being radially and/or axially recessed in a step-like manner relative to the other.

2. Anchor ring for a pipe coupling according to Claim 1, which has on its radial inside teeth (9a, 9b; 13,14; 16, 17; 19, 20; 22, 23; 25, 26; 28, 29) which can be made to engage one pipe end (10, 11) and the total number of which is divided into repeating groups of teeth with at least two different teeth in at least one group, **characterized in that** this at least one group has at least two teeth, one tooth (9b; 14; 17; 20; 23; 26; 29) of which, referred to as B-tooth, is radially and/or axially recessed in a step-like manner relative to the other tooth, referred to as A-tooth.

3. Anchor ring according to Claim 2, **characterized in that** at least one group consists of a number of teeth (9a, 9b), the size of which is between two and ten, preferably between three and six, in particular between four and five, and/or **in that** groups of teeth consist in each case of a number n of A-teeth (13, 16, 19,22, 25, 28) and a number m of B-teeth.

4. Anchor ring according to any of the preceding Claims, **characterized in that** the A-teeth (13, 16, 19,22, 25, 28) have a cutting edge on their end face.

5. Anchor ring according to Claim 4, **characterized in that** the cutting edge is asymmetrically formed.

6. Anchor ring according to any of the preceding Claims, **characterized in that** the A-teeth (13, 16, 19,22, 25, 28) have a concave, preferably V-shaped profile on their end face.

7. Anchor ring according to any of the preceding Claims, **characterized in that** the number n is at least 1 and that preferably n is less than the number m.

8. Anchor ring according to any of the preceding Claims, **characterized in that** A-teeth (13, 16, 19,22, 25, 28) and B-teeth (14, 17, 20, 23, 26, 29) are arranged so as to be uniformly distributed within a group or over the entire circumference.

9. Anchor ring according to any of the preceding Claims, **characterized in that** the A-teeth (13, 16, 19,22, 25, 28) and B-teeth (14, 17, 20, 23, 26, 29) are arranged so as to be asymmetrically distributed within a group or over the entire circumference.

10. Anchor ring according to any of the preceding Claims, **characterized in that** the B-teeth (14, 17, 20, 23, 26, 29) are compressed by a forming process or processed by a material-abrading process.

11. Anchor ring according to any of the preceding Claims, **characterized in that** the A-teeth (13, 16, 19,22,25,28) are stretched by a forming process or formed by material application.

12. Anchor ring according to any of the preceding Claims, **characterized in that** the lateral flanks of the teeth are bevelled.

## Revendications

**1.** Raccord tendable de tuyaux comprenant un boîtier (1) tendable autour des extrémités des tuyaux (10, 11) à relier ayant au moins un élément d'étoupage (6), qui consiste, de préférence, d'un élastomère, et ayant au moins un anneau d'ancrage (8a, 8b, 12, 15, 18, 21, 24, 27), dont le diamètre peut être changé, particulièrement pour relier des tuyaux aux extrémités lisses d'une manière axialement résistante à la traction, l'anneau d'ancrage (8a, 8b, 12, 15, 18, 21, 24, 27), en état tendu du raccord de tuyaux, s'appuyant axialement et/ou radialement d'une part au boîtier (1) et d'autre part à une extrémité de tuyau (10, 11) et comprenant à son côté intérieur des dents (9a, 9b; 13, 14; 16, 17; 19, 20; 22, 23; 25, 26; 28, 29), qui peuvent être amenés en prise avec l'extrémité de tuyau (10, 11) respectif, et dont le nombre total est subdivisé en groupes itératives de dents avec au moins deux dents différents dans au moins une groupe, cette au moins une groupe comprenant au moins deux dents, dont l'un (9b; 14; 17; 20; 23; 26; 29) est déplacé radialement et/ou axialement en échelon en arrière relativement à l'autre.

**2.** Anneau d'ancrage pour un raccord de tuyaux selon la revendication 1, qui comprend à son côté radial intérieur des dents (9a, 9b; 13. 14; 16, 17; 19, 20; 22, 23; 25, 26; 28, 29), qui peuvent être amenés en prise avec une extrémité de tuyau (10, 11), dont le nombre total est subdivisé en groupes itératives de dents avec au moins deux dents différents dans au moins une groupe, **caractérisé en ce, que** cette au moins une groupe comprend au moins deux dents, dont un dent, dit dent B, (9b; 14; 17; 20; 23; 26; 29) est déplacé radialement et/ou axialement en échelon en arrière relativement à l'autre dent, dit dent A.

**3.** Anneau d'ancrage selon la revendication 2, **caractérisé en ce, qu'**au moins une groupe consiste d'un nombre de dents (9a, 9b), dont la grandeur est entre deux et dix, préférablement entre trois et six, particulièrement entre quatre et cinq, et/ou que des groupes de dents consistent respectivement d'un nombre n des dents A (13, 16, 19, 22, 25, 28) et un nombre m des dents B.

**4.** Anneau d'ancrage selon une quelconque des revendications précédentes, **caractérisé en ce, que** les dents A (13, 16, 19, 22, 25, 28) comprennent à sa surface frontale une arête coupante.

**5.** Anneau d'ancrage selon la revendication 4, **caractérisé en ce, que** l'arête coupante est formée d'une façon asymétrique.

**6.** Anneau d'ancrage selon une quelconque des revendications précédentes, **caractérisé en ce, que** les dents A (13, 16, 19, 22, 25, 28) comprennent à sa surface frontale un profil concave, préférablement formé en V.

**7.** Anneau d'ancrage selon une quelconque des revendications précédentes, **caractérisé en ce, que** le nombre n est au moins 1, et que de préférence n est plus petit que le nombre m.

**8.** Anneau d'ancrage selon une quelconque des revendications précédentes, **caractérisé en ce, que** les dents A (13, 16, 19, 22, 25, 28) et les dents B (14, 17, 20, 23, 26, 29) sont distribués régulièrement, soit au dedans d'une groupe, soit autour toute la périphérie.

**9.** Anneau d'ancrage selon une quelconque des revendications précédentes, **caractérisé en ce, que** les dents A (13, 16, 19, 22, 25, 28) et les dents B (14, 17, 20, 23, 26, 29) sont distribués asymétriquement, soit au dedans d'une groupe, soit autour toute la périphérie.

**10.** Anneau d'ancrage selon une quelconque des revendications précédentes, **caractérisé en ce, que** les dents B (14, 17, 20, 23, 26, 29) sont refoulés par un procédé de transformation ou sont traités par un procédé d'enlèvement de matière.

**11.** Anneau d'ancrage selon une quelconque des revendications précédentes, **caractérisé en ce, que** les dents A (13, 16, 19, 22, 25, 28) sont étirés par un procédé de transformation ou sont formés par l'application de matière.

**12.** Anneau d'ancrage selon une quelconque des revendications précédentes, **caractérisé en ce, que** les flancs latéraux des dents sont chanfreinés.

Fig. 2

Fig. 1

Fig. 3

Fig. 4

Fig. 5

Fig. 6

Fig. 7

Fig. 8

Fig. 9

Fig. 10

Fig. 11

Fig. 12